# EUROPÄISCHE PATENTSCHRIFT

(11) **EP 2 888 506 B1**
(45) Veröffentlichungstag und Bekanntmachung des Hinweises auf die Patenterteilung: **26.02.2020**
(21) Anmeldenummer: 13756042.1
(22) Anmeldetag: 22.08.2013
(51) Int. Cl.: F16F 15/14, F16F 15/31

(54) **FLIEHKRAFTPENDEL**
CENTRIFUGAL PENDULUM
PENDULE CENTRIFUGE

(30) Priorität: 27.08.2012 DE 102012016924
(43) Veröffentlichungstag der Anmeldung: 01.07.2015
(73) Patentinhaber: Bayerische Motoren Werke Aktiengesellschaft, 80809 München (DE)
(72) Erfinder: ULBRICH, Heinz, 81929 München (DE); MAYET, Johannes, 81247 München (DE)
(86) Internationale Anmeldenummer: PCT/EP2013/067455
(87) Internationale Veröffentlichungsnummer: WO 2014/033043

(56) Entgegenhaltungen:
- DE-A1- 10 331 391
- DE-A1-102010 052 389
- US-A- 1 641 230
- US-A- 2 079 226
- US-A- 2 387 776

## Beschreibung

Die Erfindung betrifft ein Fliehkraftpendel, insbesondere zur Anordnung auf einer Antriebswelle eines Verbrennungsmotors.

Bei Viertakt-Hubkolbenmotoren führt der periodische Ablauf der vier Takte (Ansaugen, Verdichten, Arbeiten, Ausstoßen) in Kombination mit der Zündfolge der einzelnen Zylinder zu Drehungleichförmigkeiten der Kurbelwelle und des angeschlossenen Schwungrades. Da ein Antriebsstrang aufgrund der darin enthaltenen Trägheiten und Steifigkeiten ein drehschwingungsfähiges Gebilde mit charakteristischen Eigenfrequenzen ist, führen die vom Motor eingeleiteten Drehungleichförmigkeiten zwangsläufig zu Drehschwingungen. Diese müssen konstruktiv gemindert werden.

Der Trend geht zu Motoren mit geringerer Anzahl von Zylindern und auch die Absenkung des Drehzahlniveaus steht bei den Motorentwicklern im Focus. Das führt indes zu einer höheren Drehungleichförmigkeit, die wiederum neue Dämpfungskonzepte notwendig macht.

Bekannte Vorrichtungen zur Reduktion von Torsionsschwingungen bei schwankenden Drehmomentbelastungen existieren branchenabhängig (Kraftfahrzeug-, Schifffahrt-, Luftfahrttechnik, Werkzeugmaschinen etc.) in unterschiedliche Ausprägungen. In der Kraftfahrzeugtechnik etablierte Vorrichtungen zur Reduktion von Torsionsschwingungen sind beispielsweise Ein- bzw. Zweimassenschwungräder und inzwischen auch Fliehkraftpendel, sowie Kombinationen aus den jeweiligen Vorrichtungen. Die bekannten Vorrichtungen können aber moderne industrielle Anforderungen (z. B. Laufruhe) bei hohen und/oder niederfrequenten Drehmomentbelastungen nur unzureichend erfüllen.

Bei der dynamischen Auslegung von Vorrichtungen zur Reduktion von Torsionsschwingungen bei schwankenden Drehmomentbelastungen sind stationäre Betriebszustände, insbesondere das Betreiben einer Arbeitsmaschine (unter Last) bei nahezu konstanter Drehzahl, genauso zu berücksichtigen wie instationäre Betriebszustände, insbesondere das Beschleunigen bzw. Abbremsen einer Arbeitsmaschine (unter Last). In Bezug auf stationäre Betriebszustände haben bekannte Fliehkraftpendelvorrichtungen den Nachteil, dass die Wirkung sensitiv gegenüber Lagerreibung ist, durch einen eingeschränkten Pendelausschlagwinkel begrenzt ist und restriktiven Geometrieverhältnissen unterliegt. In Bezug auf instationäre Betriebszustände haben bekannte Fliehkraftpendelvorrichtungen den Nachteil, dass die maximalen Ausschlagwinkel bei reibungs- bzw. dämpfungsarmer Auslegung durch Zusatzmaßnahmen begrenzt werden. Maßnahmen, die ein stoßfreies Abbremsen der Pendelmassen ermöglichen, sind aus akustischer Sicht erstrebenswert. Etablierte Fliehkraftpendelsysteme erfüllen dies nur unzureichend.

Aus der US 2 387 776 A ist eine Schwingungsverringerungsvorrichtung bekannt. Bei dieser sind jedoch, im Unterschied zur Erfindung, die Pendelkörper 13 nicht auf dem Antriebsring 1, 3, sondern über die Lagerstelle 7 auf dem Synchronisierungsring 6 gelagert. Darüber hinaus ist in der Erfindung der Pendelkörper über ein Kopplungselement kinematisch an den Synchronisierungsring gekoppelt, wohingegen in der US 2 387 776 A der Pendelkörper 13 über ein Kopplungselement 10 an den Antriebsring 1, 3 gekoppelt ist. Ferner ist das Kopplungselement 10 der US 2 387 776 A nicht frei beweglich in räumlich begrenzten Konturen des Synchronisierrings 6 eingelegt. Auch weist die US 2 387 776 A nicht auf, dass der Pendelkörper 13 translatorisch verschiebbar auf dem Antriebsring 1, 3 gelagert ist.

Aus der US 1 641 230 A ist ein Vibrationsdämpfer bekannt. Bei diesem sind Pendelkörper c beweglich an einem Antriebsring b gelagert. In Abwesenheit einer Fliehkraft liegen die Pendelkörper c am Antriebsring b an und werden von elastischen Klötzen e' gegen den Antriebsring b gedrückt. Somit können sich die Pendelkörper in dieser Position bei einer anfänglichen Torsion von Antriebs- und Synchronisierring nicht zur Drehachse hin bewegen, weil bereits am Antriebsring b anliegen.

Weitere Vorrichtungen zur Schwingungsdämpfung sind aus der DE 10 2010 052389 A1, der DE 103 31 391 A1 sowie der US 2 079 226 A bekannt.

Aufgabe der Erfindung ist es, die modernen industriellen Anforderungen an die Reduktion von Torsionsschwingungen bei schwankenden Drehmomentbelastungen besser zu erfüllen. Insbesondere sollen Schwingungsprobleme bei niedrigen Drehzahlen besser bewältigt werden.

Gelöst wird diese Aufgabe durch ein Fliehkraftpendel mit den Merkmalen des Anspruchs 1 und 7. Vorteilhafte und zweckmäßige Ausgestaltungen des erfindungsgemäßen Fliehkraftpendels sind in den Unteransprüchen angegeben.

Gemäß einem Ausführungsbeispiel der Erfindung ist das Fliehkraftpendel insbesondere zur Anordnung auf einer Antriebswelle eines Verbrennungsmotors vorgesehen und umfasst einen auf einer Antriebswelle drehfest montierbaren Antriebsring und einen relativ zum Antriebsring frei drehbaren Synchronisierring. Die Drehachse des Antriebsrings und die Drehachse des Synchronisierrings sind identisch. Das Fliehkraftpendel umfasst ferner wenigstens einen auf dem Antriebsring beweglich gelagerten Pendelkörper. Der Pendelkörper ist über wenigstens ein Kopplungselement kinematisch so an den Synchronisierring gekoppelt, dass das Kopplungselement bei einer Drehung des Synchronisierrings relativ zum Antriebsring in einer ersten Richtung den Schwerpunkt des Pendelkörpers zur Drehachse hin auslenkt. Als Kopplungselement wird ein Rollkörper, insbesondere ein Bolzen verwendet, der frei beweglich in räumlich begrenzten Konturen des Synchronisierrings und des Pendelkörpers eingelegt ist. Das Zusammenspiel der Konturen und des Rollkörpers, der auf den Konturen abrollen kann, ermöglicht eine (beliebige) nichtlineare Kinematik zwischen den Pendelkörpern und dem Synchronisierring, wenn sich Antriebsring und Synchronisierring relativ zueinander verdrehen. Durch die Formgestaltung der Konturen kann eine tautochrone Abstimmung des Fliehkraftpendels erreicht werden.

Das erfindungsgemäße Fliehkraftpendel basiert auf einem anderen Prinzip als bislang bekannte Systeme. Die relative Verdrehung des angetriebenen Antriebsrings zu dem an sich frei drehbaren Synchronisierring führt zu einer Auslenkung des Schwerpunkts des Pendelkörpers nach innen, die aber durch die Fliehkraft wieder (über)kompensiert werden kann. Wenn mehrere Pendelkörper an den Synchronisierring gekoppelt sind, muss lediglich sichergestellt sein, dass der resultierende Gesamtschwerpunkt der Pendelkörper durch die relative Verdrehung nach innen und durch die Fliehkraft wieder nach außen auslenkbar ist. Dieses Prinzip ermöglicht eine äußerst effektive und stabile Dämpfung von Drehschwingungen, insbesondere bei niedrigen Drehzahlen. Der Synchronisierring stellt dabei eine zusätzliche träge Masse zur Verfügung, wodurch die Gesamtträgheit verlagert wird. Wenn mehrere Pendelkörper vorgesehen sind, sorgt der Synchronisierring zudem für eine synchrone, gleichförmige Bewegung aller Pendelkörper.

Die Erfindung kann branchenübergreifend für die Kompensation von schwankenden Torsionsdrehmomenten eingesetzt werden. Die Größenverhältnisse können entsprechend den maximalen Torsionsdrehmomentspitzen skaliert werden (z. B. Vergrößerung/Verkleinerung des Abstandes von Pendelkörperschwerpunkt zur Drehachse und/oder Erhöhung/Reduzierung der Pendelkörpermassen). Das erfindungsgemäße Fliehkraftpendel kann als unterstützende Zusatzmaßnahme für schwingungsentkoppelnde bzw. schwingungsdämpfende Systeme verwendet werden. Insbesondere ist eine Montage auf der Sekundärseite eines Zweimassenschwungrads möglich. Allgemein ist das Fliehkraftpendel in schwingungsentkoppelnde bzw. schwingungsdämpfende Systeme gut integrierbar.

Um eine weitgehend gleichmäßige Schwingung des Pendelkörpers zu gewährleisten, sollte das Kopplungselement bei einer fliehkraftbedingten Auslenkung des Pendelkörpers weg von der Drehachse den Synchronisierring relativ zum Antriebsring in einer zur ersten Richtung (= die vorangegangene Verdrehrichtung, die zur Auslenkung des Pendelkörpers nach innen geführt hat) entgegengesetzten Richtung drehen.

Grundsätzlich kann der Pendelkörper auf verschiedene Weise beweglich auf dem Antriebskörper gelagert sein. Gemäß einer ersten Gruppe von bevorzugten Ausführungsformen ist der Pendelkörper drehbar auf dem Antriebsring gelagert, wobei das Kopplungselement nur eine begrenzte Drehung des Pendelkörpers zulässt. Der Pendelkörper führt in diesem Fall kontrollierte Drehschwingungen durch.

Gemäß einem ersten bevorzugten Aufbau des erfindungsgemäßen Fliehkraftpendels ragt der Pendelkörper zwischen zwei starr miteinander verbundenen Scheiben des Synchronisierrings hinein, wobei sich das Kopplungselement von einer Kontur der ersten Scheibe durch eine Kontur des Pendelkörpers hindurch bis in eine der Kontur der zweiten Scheibe erstreckt, die der Kontur der ersten Scheibe exakt gegenüberliegt.

Gemäß einem alternativen zweiten bevorzugten Aufbau ragt der Synchronisierring zwischen zwei starr miteinander verbundenen Hälften des Pendelkörpers hinein, wobei sich das Kopplungselement von einer Kontur der ersten Pendelkörperhälfte durch eine Kontur des Synchronisierrings hindurch bis in eine der Kontur der zweiten Pendelkörperhälfte erstreckt, die der Kontur der ersten Pendelkörperhälfte exakt gegenüberliegt.

Darüber hinaus stellt die Erfindung ein Fliehkraftpendel bereit, aufweisend einen auf einer Antriebswelle drehfest montierbaren Antriebsring und einen relativ zum Antriebsring frei drehbaren Synchronisierring. Die Drehachse des Antriebsrings und die Drehachse des Synchronisierrings sind identisch. Das Fliehkraftpendel umfasst ferner wenigstens einen auf dem Antriebsring beweglich gelagerten Pendelkörper. Der Pendelkörper ist über wenigstens ein Kopplungselement kinematisch so an den Synchronisierring gekoppelt, dass das Kopplungselement bei einer Drehung des Synchronisierrings relativ zum Antriebsring in einer ersten Richtung den Schwerpunkt des Pendelkörpers zur Drehachse hin auslenkt. Ferner ist eine lineare Lagerung des Pendelkörpers auf dem Antriebsring, bei der der Pendelkörper translatorisch verschiebbar ist, vorzugsweise in radialer Richtung, vorgesehen.

So kann als Beispiel dieser zweiten Gruppe von bevorzugten Ausführungsformen als Kopplungselement ein Faden oder ein Band vorgesehen sein, mit dem der Pendelkörper mit dem Synchronisierring verbunden ist. Eine bevorzugte Kinematik lässt sich dann insbesondere dadurch erreichen, dass der Synchronisierring einen Außenumfang mit einer (je nach Anforderung zu gestaltenden) Kontur hat, an die sich der Faden oder das Band bei einer relativen Verdrehung zwischen Antriebsring und Synchronisierring anschmiegt.

Auch ein Gelenkmechanismus, über den der Pendelkörper mit dem Synchronisierring verbunden ist, kann als Kopplungselement dienen.

Eine weitere Gestaltung sieht vor, dass der Pendelkörper an einen Außenabschnitt des Synchronisierrings gekoppelt ist, indem der Pendelkörper in eine Rolle eingehängt ist, die an einer Kontur des Synchronisierrings abrollen kann.

Ebenso wie bei einer drehbaren Lagerung kann auch bei einer linearen Lagerung des Pendelkörpers ein Rollkörper als Kopplungselement verwendet werden, insbesondere ein Bolzen, der frei beweglich in Konturen des Synchronisierrings und des Pendelkörpers eingelegt ist.

Obwohl für die grundlegende Funktionsweise des erfindungsgemäßen Fliehkraftpendels nur ein Pendelkörper erforderlich ist, können mit mehreren Pendelkörpern, die in Umfangsrichtung verteilt auf dem Antriebsring gelagert sind, höhere Dämpfungswirkungen bei geringerer Unwucht erreicht werden. Bei einer Drehung des Synchronisierrings relativ zum Antriebsring in der ersten Richtung muss dann der Gesamtschwerpunkt aller Pendelkörpers zur Drehachse hin ausgelenkt werden.

Für die Kopplung des Antriebsrings an die Antriebswelle und/oder für eine Kopplung des Antriebsrings an den Synchronisierring und/oder für die Lagerung des Pendelkörpers auf dem Antriebsring kann wahlweise (jeweils) ein elastisches Element vorgesehen sein.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 eine perspektivische Ansicht eines erfindungsgemäßen Fliehkraftpendels nach einer ersten Ausführungsform;
- Figur 2 das Fliehkraftpendel aus Figur 1 ohne den Deckel des Synchronisierrings und mit verkleinerter zweiter Scheibe;
- Figur 3 eine perspektivische Ansicht eines mehrteiligen Synchronisierrings;
- Figur 4 eine perspektivische Ansicht eines Pendelkörpers;
- Figur 5 eine perspektivische Ansicht eines erfindungsgemäßen Fliehkraftpendels nach einer zweiten Ausführungsform mit transparent dargestellten Pendelkörpern;
- Figur 6 eine schematische Draufsicht auf ein erfindungsgemäßes Fliehkraftpendel nach einer dritten Ausführungsform;
- Figur 7 eine schematische Draufsicht auf einen Ausschnitt eines erfindungsgemäßen Fliehkraftpendels nach einer vierten Ausführungsform;
- Figur 8 eine schematische Draufsicht auf einen Ausschnitt eines erfindungsgemäßen Fliehkraftpendels nach einer fünften Ausführungsform; und
- Figur 9 eine schematische Draufsicht auf einen Ausschnitt eines erfindungsgemäßen Fliehkraftpendels nach einer sechsten Ausführungsform.

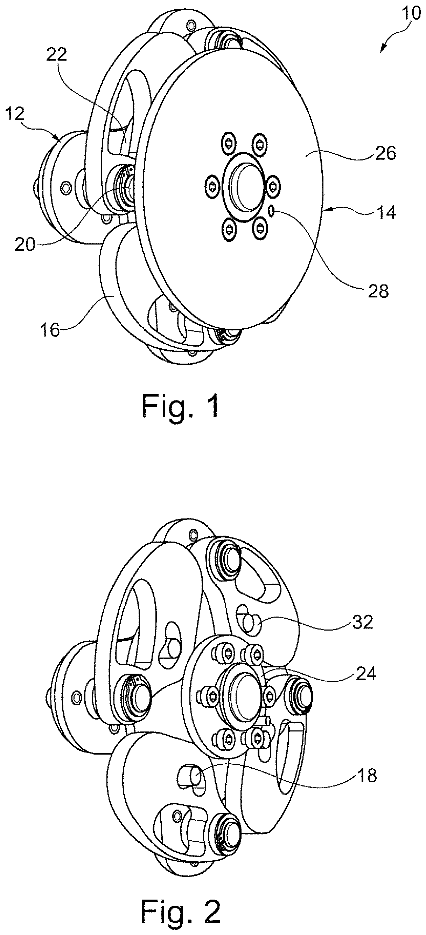

In Figur 1 bzw. Figur 2 ist ein Fliehkraftpendel 10 gemäß einer ersten Ausführungsform gezeigt, das als Torsionsschwingungstilger im Antriebsstrang eines Kraftfahrzeugs mit Verbrennungsmotor einsetzbar ist. Wesentliche Bestandteile des Fliehkraftpendels 10 sind ein Antriebsring 12, ein Synchronisierring 14, mehrere Pendelkörper 16 und mehrere Kopplungselemente, hier in Form von Bolzen 18.

Der Antriebsring 12 ist drehfest mit einer beliebigen Antriebswelle im Antriebsstrang gekoppelt und kann beispielsweise die Sekundärseite eines Zweimassenschwungrads darstellen oder drehfest an diese gekoppelt sein. Für die Kopplung des Antriebsrings 12 mit der Antriebswelle bzw. mit der Sekundärseite eines Zweimassenschwungrads kann wahlweise ein zwischengeschaltetes elastisches Element vorgesehen sein (elastische Kopplung).

Auf dem Antriebsring 12 oder auf der Antriebswelle ist der Synchronisierring 14 mit einem Gleit- oder Wälzlager drehbar gelagert. Wesentlich ist, dass der Synchronisierring 14 selbst relativ zum Antriebsring 12 frei drehbar ist. Die Drehachse des Antriebsrings 12 und die Drehachse des Synchronisierrings 14 sind koaxial, also identisch.

Außerdem sind auf dem Antriebsring 12 mehrere Pendelkörper 16 mit Gleit- oder Wälzlagern 20 drehbar gelagert. Die Lager 20 der Pendelkörper 16 sind bezüglich der Drehachse exzentrisch und so auf dem Antriebsring 12 angeordnet, dass sich die Pendelkörper 16 in einer zur Drehachse senkrechten Ebene drehen können. Grundsätzlich reicht auch ein einziger Pendelkörper 16 aus; nachfolgend wird aber von mehreren gleichverteilten Pendelkörpern 16 ausgegangen, wie im Ausführungsbeispiel der Figuren 1 und 2 gezeigt.

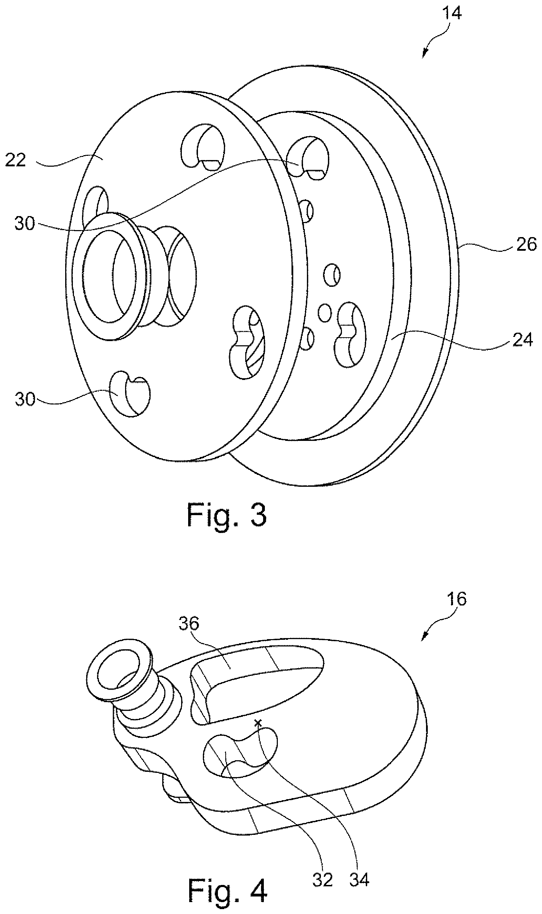

In Figur 3 ist der relativ zum Antriebsring 12 drehbare Synchronisierring 14 separat dargestellt. Der Synchronisierring 14 ist hier mehrteilig ausgebildet. Auf der dem Antriebsring 12 zugewandten Seite der Pendelkörper 16 ist eine erste Scheibe 22 angeordnet, und auf der vom Antriebsring 12 abgewandten Seite der Pendelkörper 16 ist eine zweite Scheibe 24 angeordnet. Die beiden Scheiben 22, 24 sind starr miteinander verbunden.

Anstelle der beiden Scheiben 22, 24 kann auch eine dicke Scheibe vorgesehen sein, wobei der Zwischenraum zwischen den beiden Scheiben 22, 24 durch eine oder mehrere Nuten ersetzt sind, in die die Pendelkörper 16 hineinragen.

Auf der vom Antriebsring 12 abgewandten Seite der zweiten Scheibe 24 ist ein Deckel 26 angeordnet, der an der zweiten Scheibe 24 befestigt ist. Der Deckel 26 kann auch einstückig mit der zweiten Scheibe 24 ausgebildet sein. Ein Spannstift 28 sorgt für eine exakte vorbestimmte Orientierung der beiden Scheiben 22, 24 zueinander.

In beide Scheiben 22, 24 sind in Umfangsrichtung verteilt jeweils mehrere vorzugsweise identische Konturen 30 eingearbeitet, wobei die Konturen 30 der ersten Scheibe 22 den Konturen 30 der zweiten Scheibe 24 exakt gegenüberliegen. In Figur 2 sind die Konturen der zweiten Scheibe 24 nicht zu sehen, da von der zweiten Scheibe 24 nur der innere Teil dargestellt ist, um den Blick auf die nachfolgend genauer beschriebenen Pendelkörper 16 freizugeben.

Die vorzugsweise identischen Pendelkörper 16, von denen in Figur 4 einer separat dargestellt ist, sind vorzugsweise jeweils im gleichen Abstand von der Drehachse schwenkbar auf dem Antriebsring 12 gelagert. Jeder Pendelkörper 16 weist eine Kontur 32 auf. Mit 34 ist der Schwerpunkt des Pendelkörpers 16 bezeichnet, dessen Lage durch die generelle Form des Pendelkörpers 16 und optional durch die Gestaltung einer Aussparung 36 im Pendelkörper 16 festgelegt ist.

Die auf dem Antriebsring 12 gelagerten Pendelkörper 16 sind mittels der Bolzen 18 an den Synchronisierring 14 gekoppelt. Die Bolzen 18 sind in die Konturen 30 bzw. 32 eingelegt, genauer gesagt erstreckt sich jeder Bolzen 18 von einer Kontur 30 der ersten Scheibe 22 durch die Kontur 32 eines Pendelkörpers 16 hindurch bis in die gegenüberliegende Kontur 30 der zweiten Scheibe 24. Die Bolzen 18 sind weder mit dem Synchronisierring 14 noch mit den Pendelkörpern 16 verbunden.

In axialer Richtung sind die Bolzen 18 einerseits durch den Antriebsring 12 gesichert, der ein Herausfallen der Bolzen 18 aus den Konturen 30 der ersten Scheibe 22 verhindert. Damit die Bolzen 18 nicht aus den Konturen 30 der zweiten Scheibe 24 herausfallen können, ist der Deckel 26 vorgesehen. Alternativ könnten aber auch andere Abdeckungen vorgesehen sein, oder die Konturen 30 in den Scheiben 22, 24 könnten in axialer Richtung nur eine bestimmte Tiefe haben und nicht durchgängig sein. Auch eine Ausbildung der Bolzen 18 mit Kragen zur axialen Sicherung ist möglich.

Die Bolzen 18 und die Konturen 30, 32 des Synchronisierrings 14 und der Pendelkörper 16 sind so aufeinander abgestimmt, dass die Pendelkörper 16 eine begrenzte Drehbewegung um ihre Lager 20 bei gleichzeitiger Verdrehung des Synchronisierrings 14 relativ zum Antriebsring 12 durchführen können. Die Bolzen 18 dienen dabei als Rollkörper, die auf den Konturen 30, 32 abrollen.

Allgemein ermöglichen die Konturen 30, 32 und die Bolzen 18 eine (beliebige) nichtlineare Kinematik zwischen den Pendelkörpern 16 und dem Synchronisierring 14. Durch die Formgestaltung der an die Bolzen 18 angepassten Konturen 30, 32 kann eine tautochrone Abstimmung des Fliehkraftpendels 10 erreicht werden.

Im Folgenden wird die grundlegende Funktionsweise des Fliehkraftpendels 10 beschrieben.

Die Figuren 1 und 2 zeigen einen Zustand des Fliehkraftpendels 10, in dem keine Torsionskräfte wirken bzw. die Pendelkörper 16 maximal ausgelenkt sind. Wenn der Motor gestartet wird und sich die Antriebswelle dreht, nimmt diese den Antriebsring 12 mit. Der frei drehbare Synchronisierring 14 läuft aufgrund seiner Trägheit der Drehung zunächst hinterher. Die dadurch entstehende Verdrehung zwischen Antriebsring 12 und Synchronisierring 14 führt dazu, dass die Bolzen 18 so auf den Konturen 30, 32 abrollen, dass die Pendelkörper 16 nach innen ausgelenkt werden, genauer gesagt wandert der Gesamtschwerpunkt der Pendelkörper 16, der sich aus der Lage aller Schwerpunkten 34 der einzelnen Pendelkörper 16 ergibt, in Richtung Drehachse.

Die Fliehkraft zieht im weiteren Verlauf der Drehung die Pendelkörper 16 aber nach außen. Dadurch werden die Pendelkörper 16 so weit nach außen ausgelenkt, dass die in den Konturen 30, 32 abrollenden Bolzen 18 den Synchronisierring 14 zu einer Verdrehung relativ zum Antriebsring 12 zwingen, jedoch in entgegengesetzter Drehrichtung. Das führt schließlich dazu, dass der Synchronisierring 14 nach einer gewissen Drehung den Antriebsring 12 kurzzeitig überholt. Die relative Verdrehung zwischen Antriebsring 12 und Synchronisierring 14 in der entgegengesetzten Drehrichtung hat aber wieder zur Folge, dass die Pendelkörper 16 durch die kinematische Kopplung über die Bolzen 18 nach innen ausgelenkt werden.

Diese Vorgänge wiederholen sich, sodass es zu einer Pendelbewegung der Pendelkörper 16 kommt. Die kinematische Beziehung zwischen der relativen Verdrehung von Synchronisierring 14 und Antriebsring 12 und der Auslenkung der Pendelkörper 16 ist durch die Massen der Pendelkörper 16 und die Massenträgheit des Synchronisierrings 14 sowie durch die Art der Schwingungsanregung bestimmt. Der Synchronisierring 14 stellt dabei eine zusätzliche träge Masse zur Verfügung, wodurch die Gesamtträgheit verlagert wird. Außerdem sorgt der Synchronisierring 14 für eine synchrone, gleichförmige Bewegung aller Pendelkörper 16.

Bei gleichmäßiger Drehung der Antriebswelle, d. h. wenn über eine längere Zeit ein konstantes Drehmoment an der Antriebswelle anliegt, schwingt das Fliehkraftpendel 10 aus und es stellt sich ein Gleichgewichtszustand ein. Treten jedoch, wie bei einem Verbrennungsmotor üblich, aufgrund von Drehungleichförmigkeiten Drehmomentschwankungen auf, wird das Fliehkraftpendel 10 zu Schwingungen angeregt. Die schwingenden Massen sorgen dann effektiv für eine Dämpfung der Drehschwingungen im Antriebsstrang.

Um die relative Verdrehung zwischen Antriebsring 12 und Synchronisierring 14 zu begrenzen, kann ein elastisches Kopplungselement zwischen diesen beiden Ringen vorgesehen sein. Hierzu wird beispielsweise der Synchronisierring 14 direkt an der Lagerstelle auf der Antriebswelle bzw. dem Antriebsring 12 mit einem elastisch verformbaren Element verbunden.

Ebenso können die Lager 20 elastische Kopplungselemente aufweisen, die die Schwenkbewegungen der Pendelkörper 16 relativ zum Antriebsring 12 gezielt beeinflussen. Hierzu wird beispielsweise der Pendelkörper 16 direkt an der Lagerstelle auf dem Antriebsring 12 mit einem elastisch verformbaren Element verbunden, welches seinerseits fest mit dem Antriebsring 12 verbunden ist.

Des Weiteren kann eine zusätzliche Einrichtung vorgesehen sein, mit der der Synchronisierring 14 in Drehrichtung aktiv abgebremst oder beschleunigt werden kann.

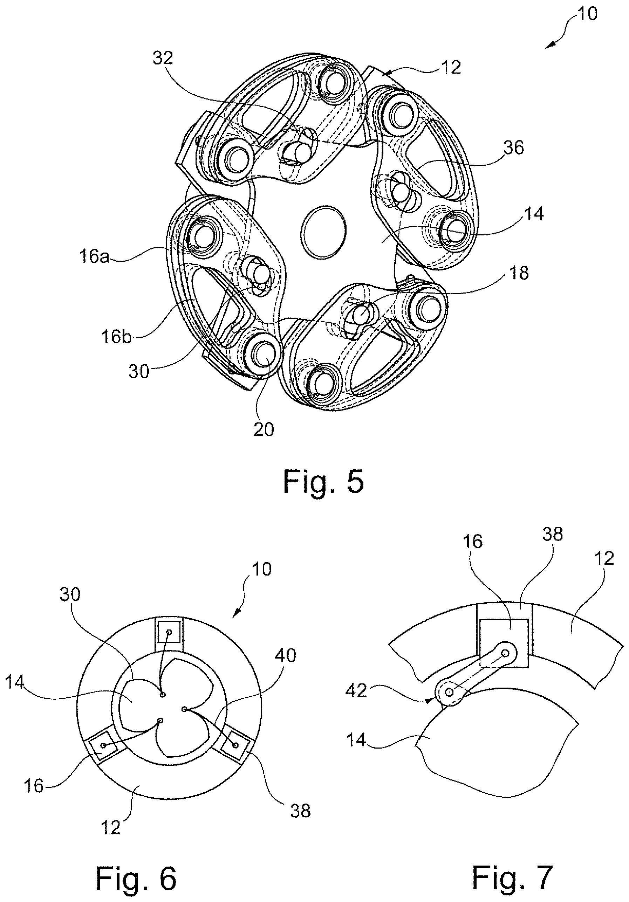

In Figur 5 ist ein Fliehkraftpendel 10 nach einer zweiten Ausführungsform dargestellt. Der wesentliche Unterschied zu der zuvor beschriebenen Ausführungsform besteht in der abweichenden Gestaltung des Synchronisierrings 14 und der Pendelkörper 16.

Die Pendelkörper 16 sind hier im Wesentlichen aus zwei Hälften 16a, 16b gebildet mit einem Spalt dazwischen. An geeigneter Stelle sind die Pendelkörperhälften 16a, 16b starr miteinander verbunden, sodass sie sich gemeinsam um das Lager 20 drehen können. Alternativ können die Pendelkörper 16 auch einstückig mit einer dem Spalt entsprechenden Nut ausgebildet sein. Jede Pendelkörperhälfte 16a hat eine Kontur 32, die einer identischen Kontur 32 der anderen Pendelkörperhälfte 16b exakt gegenüberliegt.

Der Synchronisierring 14 ist hier dagegen einteilig als einzelne Scheibe ausgeführt. Die Konturen 30 des Synchronisierrings 14 sind durchgehend. Der Synchronisierring 14 ist frei drehbar zwischen den Pendelkörperhälften 16a, 16b angeordnet.

Die kinematische Kopplung der Pendelkörper 16 an den Synchronisierring 14 erfolgt wiederum durch die freien Bolzen 18, die in die Konturen 30, 32 eingelegt sind. Hier erstrecken sich die die Bolzen 18 sich von den Konturen 32 der einen Pendelkörperhälfte 16a durch die Konturen 30 des Synchronisierrings 14 hindurch bis in die Konturen 32 der gegenüberliegenden Pendelkörperhälfte 16b.

In axialer Richtung sind die Bolzen 18 einerseits durch den Antriebsring 12 gesichert; auf der anderen Seite können entweder Abdeckungen an den Pendelkörperhälften 16b angebracht sein. Oder die Konturen 32 haben in den Pendelkörperhälften 16a und/oder 16b in axialer Richtung nur eine bestimmte Tiefe und sind nicht durchgängig.

Die Funktionsweise des Fliehkraftpendels 10 entspricht der der ersten Ausführungsform, d. h. der Synchronisierring 14 sorgt für ein synchrones Pendeln der Pendelkörper 16 in Form von Drehschwingungen um die Lager 20.

In den Figuren 6 bis 9 sind schematisch vier weitere Ausführungsformen des Fliehkraftpendels 10 dargestellt, bei denen die Pendelkörper 16 nicht drehbar, sondern radial verschiebbar in entsprechenden Führungen 38 des Antriebsrings 12 gelagert sind. Auch hier wird im Folgenden von mehreren Pendelkörpern 16 ausgegangen, obwohl auch nur ein einzelner Pendelkörper 16 vorgesehen sein kann.

Bei der in Figur 6 gezeigten Ausführungsform sind die Pendelkörper 16 über Fäden oder Bänder 40 mit dem Synchronisierring 14 verbunden. Der Synchronisierring 14 selbst hat einen Außenumfang mit speziellen Konturen 30 für die Fäden oder Bänder 40, welche hier anstelle der Bolzen 18 für die kinematische Kopplung der Pendelkörper 16 an den Synchronisierring 14 sorgen. Durch die Gestaltung der Konturen 30 kann die kinematische Kopplung an bestimmte Anforderungen angepasst werden.

Ähnlich wie bei den zuvor beschriebenen Ausführungsformen bewirkt eine Verdrehung des Synchronisierrings 14 relativ zum Antriebsring 12 eine Verlagerung der Pendelkörper 16 in den Führungen 38 zur Drehachse hin, da sich die Fäden oder Bänder 40 an die Konturen 30 anschmiegen und durch ihre Auslenkung in Drehrichtung die Pendelkörper 16 bzw. den Gesamtschwerpunkt der Pendelkörper 16 nach innen ziehen. Die Verlagerung der Pendelkörper 16 ist aufgrund der linear ausgelegten Führungen 38 hier translatorisch. Die Fliehkraft sorgt wiederum dafür, dass die Pendelkörper 16 nach außen gezogen werden, sodass die Drehrichtung des Synchronisierrings 14 relativ zum Antriebsring 12 umgedreht wird. Die Wiederholung dieser Vorgänge führt zu einem Schwingen des Fliehkraftpendels 10.

Die in der Figur 7 gezeigte Ausführungsform des Fliehkraftpendels 10 ist der Ausführungsform der Figur 6 sehr ähnlich. Anstelle der Fäden oder Bänder 40 sorgt hier jeweils ein Gelenkmechanismus 42 für die kinematische Kopplung. Eine spezielle Kontur am Synchronisierring 14 ist nicht vorgesehen, da hier die vorher genau festgelegte Auslegung des Gelenkmechanismus 42 maßgeblich für das Schwingungsverhalten verantwortlich ist.

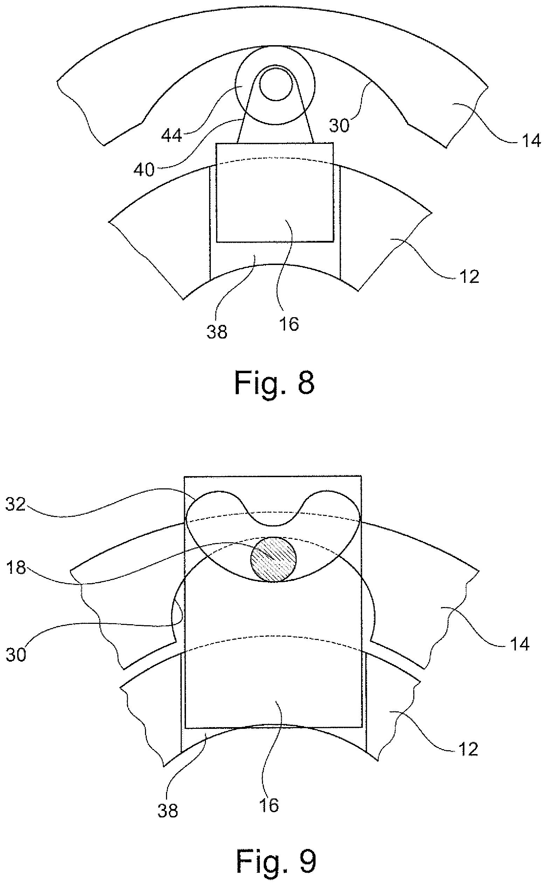

Auch bei der in Figur 8 gezeigten Ausführungsform sind Pendelkörper 16 radial verschiebbar in entsprechenden Führungen 38 des Antriebsrings 12 gelagert. Die Pendelkörper 16 sind hier an einen Außenabschnitt des Synchronisierrings 14 gekoppelt, indem die Pendelkörper 16 jeweils mit einem Faden oder Band 40 in eine Rolle 44 eingehängt sind, welche an einer innenseitigen Kontur 30 des Außenabschnitts des Synchronisierrings 14 abrollen kann.

Die in Figur 9 gezeigte Ausführungsform unterscheidet sich von der zuvor beschriebenen dadurch, dass anstelle der Rolle 44 ein Bolzen 18 und anstelle des Fadens oder Bands 40 Konturen 32 im Pendelkörper 16 vorgesehen sind. Der Pendelkörper 16 hat hier die Form eines "U" und umgreift mit seinen beiden Schenkeln den Außenabschnitt des Synchronisierrings 14. Die beiden Schenkel haben jeweils einander exakt gegenüberliegende Konturen 32. Der Bolzen erstreckt sich von der einen Kontur 32 zur gegenüberliegenden Kontur 32 und durchdringt dabei die Kontur 30 des Synchronisierrings 14. Die Konturen 30, 32 sind so aufeinander abgestimmt, dass bei einer relativen Verdrehung zwischen Antriebsring 12 und Synchronisierring 14 die Pendelkörper 16 bzw. deren Gesamtschwerpunkt nach innen gedrückt werden, und dass bei einer fliehkraftbedingten Bewegung der Pendelkörper 16 nach außen die Drehrichtung des Synchronisierrings 14 relativ zum Antriebsring 12 umgedreht wird.

Allen beschriebenen Ausführungsformen ist gemeinsamt, dass die Pendelkörper 16 kinematisch an den Synchronisierring 14 gekoppelt sind, sodass immer eine gleichförmige, synchrone Auslenkung aller Pendelkörper 16 sichergestellt ist. Grundsätzlich sind auch Ausführungsformen mit nur einem Pendelkörper 16 möglich, solange dieser kinematisch an den Synchronisierring 14 gekoppelt ist.

Die kinematische Kopplung kann auch durch Kombinationen verschiedener Konzepte realisiert sein. Die translatorische Führung der Pendelkörper 16 kann mit den in der Technik bekannten Möglichkeiten zur Linearführung umgesetzt werden (z. B. Schwalbenschwanzführung, Keilführung etc.). Vorzugsweise werden die Pendelkörper 16 zylindrisch ausgeführt und in einem dazu angepassten Zylinder geführt (ähnlich wie die Kolben in einem Verbrennungsmotor). Außerdem können die Pendelkörper 16 zur Lagerung auf dem Antriebsring 12 an ein elastisch verformbares Element gekoppelt sein, welches seinerseits fest an den Antriebsring 12 gekoppelt ist.

Wie sich aus den Zeichnungen ergibt, sind die gewählten Bezeichnungen für die Komponenten des Fliehkraftpendels 10 nicht einschränkend zu verstehen. Insbesondere müssen der Antriebsring 12 und der Synchronisierring 14 nicht die klassische Form eines Rings haben, sondern können jeweils eine hiervon abweichende Gestalt haben.

### Bezugszeichenliste

- 10: Fliehkraftpendel
- 12: Antriebsring
- 14: Synchronisierring
- 16: Pendelkörper
- 16a: erste Pendelkörperhälfte
- 16b: zweite Pendelkörperhälfte
- 18: Bolzen
- 20: Lager
- 22: erste Scheibe
- 24: zweite Scheibe
- 26: Deckel
- 28: Spannstift
- 30: Kontur (Synchronisierring)
- 32: Kontur (Pendelkörper)
- 34: Schwerpunkt
- 36: Aussparung
- 38: Führung
- 40: Faden oder Band
- 42: Gelenkmechanismus
- 44: Rolle

## Patentansprüche

1. Fliehkraftpendel (10), insbesondere zur Anordnung auf einer Antriebswelle eines Verbrennungsmotors, mit
einem auf einer Antriebswelle drehfest montierbarem Antriebsring (12),
einem relativ zum Antriebsring (12) frei drehbaren Synchronisierring (14), wobei die Drehachse des Antriebsrings (12) und die Drehachse des Synchronisierrings (14) identisch sind, und
wenigstens einem auf dem Antriebsring (12) beweglich gelagerten Pendelkörper (16),
wobei der Pendelkörper (16) über wenigstens ein Kopplungselement kinematisch so an den Synchronisierring (14) gekoppelt ist, dass das Kopplungselement (18; 40; 42; 44) bei einer Drehung des Synchronisierrings (14) relativ zum Antriebsring (12) in einer ersten Richtung den Schwerpunkt des Pendelkörpers (16) zur Drehachse hin auslenkt
wobei das Kopplungselement (18) ein Rollkörper ist, der frei beweglich in räumlich begrenzten Konturen (30, 32) des Synchronisierrings (14) und des Pendelkörpers (16) eingelegt ist.

2. Fliehkraftpendel (10) nach Anspruch 1, **dadurch gekennzeichnet, dass** das Kopplungselement (18; 40; 42; 44) bei einer fliehkraftbedingten Auslenkung des Schwerpunkts des Pendelkörpers (16) weg von der Drehachse den Synchronisierring (14) relativ zum Antriebsring (12) in einer zur ersten Richtung entgegengesetzten Richtung dreht.

3. Fliehkraftpendel (10) nach einem der vorhergehenden Ansprüche, wobei der Pendelkörper (16) drehbar auf dem Antriebsring (12) gelagert ist, wobei das Kopplungselement (18) nur eine begrenzte Drehung des Pendelkörpers (16) zulässt.

4. Fliehkraftpendel (10) nach einem der vorhergehenden Ansprüche, wobei der Rollkörper ein Bolzen ist.

5. Fliehkraftpendel (10) nach Anspruch 4, wobei der Pendelkörper (16) zwischen zwei starr miteinander verbundenen Scheiben (22, 24) des Synchronisierrings (14) hineinragt, wobei sich das Kopplungselement (18) von einer Kontur (30) der ersten Scheibe (22) durch eine Kontur (32) des Pendelkörpers (16) hindurch bis in eine der Kontur (30) der zweiten Scheibe (24) erstreckt, die der Kontur (30) der ersten Scheibe (22) exakt gegenüberliegt.

6. Fliehkraftpendel (10) nach einem der Ansprüche 1 bis 3, **dadurch gekennzeichnet, dass** der Synchronisierring (14) zwischen zwei starr miteinander verbundenen Hälften (16a, 16b) des Pendelkörpers (16) hineinragt, wobei sich das Kopplungselement (18) von einer Kontur (32) der ersten Pendelkörperhälfte (16a) durch eine Kontur (30) des Synchronisierrings (14) hindurch bis in eine der Kontur (32) der zweiten Pendelkörperhälfte (16b) erstreckt, die der Kontur (32) der ersten Pendelkörperhälfte (16a) exakt gegenüberliegt.

7. Fliehkraftpendel (10), insbesondere zur Anordnung auf einer Antriebswelle eines Verbrennungsmotors, mit
einem auf einer Antriebswelle drehfest montierbarem Antriebsring (12),
einem relativ zum Antriebsring (12) frei drehbaren Synchronisierring (14), wobei die Drehachse des Antriebsrings (12) und die Drehachse des Synchronisierrings (14) identisch sind, und
wenigstens einem auf dem Antriebsring (12) beweglich gelagerten Pendelkörper (16),
wobei der Pendelkörper (16) über wenigstens ein Kopplungselement kinematisch so an den Synchronisierring (14) gekoppelt ist, dass das Kopplungselement (18; 40; 42; 44) bei einer Drehung des Synchronisierrings (14) relativ zum Antriebsring (12) in einer ersten Richtung den Schwerpunkt des Pendelkörpers (16) zur Drehachse hin auslenkt
wobei der Pendelkörper (16) translatorisch verschiebbar auf dem Antriebsring (12) gelagert ist.

8. Fliehkraftpendel (10) nach Anspruch 7, wobei der Pendelkörper (16) in radialer Richtung translatorisch verschiebbar auf dem Antriebsring (12) gelagert ist.

9. Fliehkraftpendel (10) nach Anspruch 7, **dadurch gekennzeichnet, dass** das Kopplungselement ein Faden oder ein Band (40) ist, mit dem der Pendelkörper (16) mit dem Synchronisierring (14) verbunden ist, und dass der Synchronisierring (14) einen Außenumfang mit einer Kontur (30) hat, an die sich der Faden oder das Band (40) bei einer relativen Verdrehung zwischen Antriebsring (12) und Synchronisierring (14) anschmiegt.

10. Fliehkraftpendel (10) nach Anspruch 7, **dadurch gekennzeichnet, dass** das Kopplungselement ein Gelenkmechanismus (42) ist, über den der Pendelkörper (16) mit dem Synchronisierring (14) verbunden ist.

11. Fliehkraftpendel (10) nach Anspruch 7, **dadurch gekennzeichnet, dass** der Pendelkörper (16) an einen Außenabschnitt des Synchronisierrings (14) gekoppelt ist, indem der Pendelkörper (16) in eine Rolle (44) eingehängt ist, die an einer Kontur (30) des Synchronisierrings (14) abrollen kann.

12. Fliehkraftpendel (10) nach Anspruch 7, **dadurch gekennzeichnet, dass** Kopplungselement ein Rollkörper, insbesondere ein Bolzen (18) ist, der frei beweglich in Konturen (30, 32) des Synchronisierrings (14) und des Pendelkörpers (16) eingelegt ist.

13. Fliehkraftpendel (10) nach einem der vorhergehenden Ansprüche, **dadurch gekennzeichnet, dass** auf dem Antriebsring (12) in Umfangsrichtung verteilt mehrere Pendelkörper (16) gelagert sind, wobei bei einer Drehung des Synchronisierrings (14) relativ zum Antriebsring (12) in der ersten Richtung der Gesamtschwerpunkt aller Pendelkörpers (16) zur Drehachse hin ausgelenkt wird.

14. Fliehkraftpendel (10) nach einem der vorhergehenden Ansprüche, **dadurch gekennzeichnet, dass** für die Kopplung des Antriebsrings (12) an die Antriebswelle und/oder für eine Kopplung des Antriebsrings (12) an den Synchronisierring (14) und/oder für die Lagerung des Pendelkörpers (16) auf dem Antriebsring (12) ein elastisches Element vorgesehen ist.

## Claims

1. A centrifugal pendulum (10), especially for arranging on a drive shaft of an internal combustion engine, with
a drive ring (12) which can be mounted in rotation-resistant manner on a drive shaft,
a synchronising ring (14) which is freely rotatable relative to the drive ring (12), wherein the axis of rotation of the drive ring (12) and the axis of rotation of the synchronising ring (14) are identical, and
at least one pendulum body (16) which is movably mounted on the drive ring (12),
wherein the pendulum body (16) is kinematically coupled to the synchronising ring (14) by way of at least one coupling element such that the coupling element (18; 40; 42; 44) upon turning of the synchronising ring (14) relative to the drive ring (12) in a first direction deflects the centre of gravity of the pendulum body (16) towards the axis of rotation,
wherein the coupling element (18) is a rolling body which is placed in freely movable manner in spatially limited contours (30, 32) of the synchronising ring (14) and of the pendulum body (16).

2. A centrifugal pendulum (10) according to Claim 1, **characterised in that** the coupling element (18; 40; 42; 44) upon a centrifugally-induced deflection of the centre of gravity of the pendulum body (16) away from the axis of rotation turns the synchronising ring (14) relative to the drive ring (12) in a direction opposite to the first direction.

3. A centrifugal pendulum (10) according to one of the preceding claims, wherein the pendulum body (16) is mounted rotatably on the drive ring (12), the coupling element (18) permitting only limited turning of the pendulum body (16).

4. A centrifugal pendulum (10) according to one of the preceding claims, wherein the rolling body is a bolt.

5. A centrifugal pendulum (10) according to Claim 4, wherein the pendulum body (16) projects in between two discs (22, 24) of the synchronising ring (14) which are rigidly connected together, the coupling element (18) extending from a contour (30) of the first disc (22) through a contour (32) of the pendulum body (16) into one contour (30) of the second disc (24) which lies exactly opposite the contour (30) of the first disc (22).

6. A centrifugal pendulum (10) according to one of Claims 1 to 3, **characterised in that** the synchronising ring (14) projects in between two halves (16a, 16b) of the pendulum body (16) which are rigidly connected together, the coupling element (18) extending from a contour (32) of the first pendulum body half (16a) through a contour (30) of the synchronising ring (14) into one contour (32) of the second pendulum body half (16b) which lies exactly opposite the contour (32) of the first pendulum body half (16a).

7. A centrifugal pendulum (10), especially for arranging on a drive shaft of an internal combustion engine, with
a drive ring (12) which can be mounted in rotation-resistant manner on a drive shaft,
a synchronising ring (14) which is freely rotatable relative to the drive ring (12), wherein the axis of rotation of the drive ring (12) and the axis of rotation of the synchronising ring (14) are identical, and
at least one pendulum body (16) which is movably mounted on the drive ring (12),
wherein the pendulum body (16) is kinematically coupled to the synchronising ring (14) by way of at least one coupling element such that the coupling element (18; 40; 42; 44) upon turning of the synchronising ring (14) relative to the drive ring (12) in a first direction deflects the centre of gravity of the pendulum body (16) towards the axis of rotation,
wherein the pendulum body (16) is mounted on the drive ring (12) so as to be displaceable in translation.

8. A centrifugal pendulum (10) according to Claim 7, wherein the pendulum body (16) is mounted on the drive ring (12) so as to be displaceable in translation in the radial direction.

9. A centrifugal pendulum (10) according to Claim 7, **characterised in that** the coupling element is a thread or a band (40) with which the pendulum body (16) is connected to the synchronising ring (14), and **in that** the synchronising ring (14) has an outer periphery with a contour (30) against which the thread or the band (40) nestles upon relative turning between the drive ring (12) and synchronising ring (14).

10. A centrifugal pendulum (10) according to Claim 7, **characterised in that** the coupling element is an articulation mechanism (42) by way of which the pendulum body (16) is connected to the synchronising ring (14).

11. A centrifugal pendulum (10) according to Claim 7, **characterised in that** the pendulum body (16) is coupled to an external portion of the synchronising ring (14) in that the pendulum body (16) is hooked on a roller (44) which can roll on a contour (30) of the synchronising ring (14).

12. A centrifugal pendulum (10) according to Claim 7, **characterised in that** the coupling element is a rolling body, especially a bolt (18), which is placed in freely movable manner in contours (30, 32) of the synchronising ring (14) and of the pendulum body (16).

13. A centrifugal pendulum (10) according to one of the preceding claims, **characterised in that** a plurality of pendulum bodies (16) are mounted on the drive ring (12), distributed in the peripheral direction, with upon turning of the synchronising ring (14) relative to the drive ring (12) in the first direction the total centre of gravity of all the pendulum bodies (16) is deflected towards the axis of rotation.

14. A centrifugal pendulum (10) according to one of the preceding claims, **characterised in that** an elastic element is provided for coupling the drive ring (12) to the drive shaft and/or for coupling the drive ring (12) to the synchronising ring (14) and/or for mounting the pendulum body (16) on the drive ring (12).

## Revendications

1. Pendule centrifuge (10) destiné en particulier à être installé sur l'arbre d'entraînement d'un moteur à combustion interne comprenant :
une bague d'entraînement (12) susceptible d'être montée solidairement en rotation sur l'arbre d'entraînement,
une bague de synchronisation (14) librement mobile en rotation par rapport à la bague d'entraînement (12),
l'axe de rotation de la bague d'entraînement (12) et l'axe de rotation de la bague de synchronisation (14) étant identiques, et
au moins un corps de pendule (16) monté mobile sur la bague d'entraînement (12),
le corps de pendule (16) étant couplé cinématiquement à la bague de synchronisation (14) par l'intermédiaire d'au moins un élément de couplage de sorte que, lors d'une rotation de la bague de synchronisation (14) par rapport à la bague d'entraînement (12) dans une première direction l'élément de couplage (18, 40, 42, 44) déplace le centre de gravité du corps de pendule (16) vers l'axe de rotation,
l'élément de couplage (18) étant un corps de roulement qui est introduit en étant librement mobile dans des contours limités dans l'espace (30, 32) de la bague de synchronisation (14) et du corps de pendule (16).

2. Pendule centrifuge (10) conforme à la revendication 1,
**caractérisé en ce que**
lors d'un déplacement conditionné par la force centrifuge du centre de gravité du corps de pendule (16) en s'éloignant de l'axe de rotation, l'élément de couplage (18, 40, 42, 44) fait tourner la bague de synchronisation (14) par rapport à la bague d'entraînement (12) dans une direction opposée à la première direction.

3. Pendule centrifuge (10) conforme à l'une des revendications précédentes,
dans lequel le corps de pendule (16) est monté mobile en rotation sur la bague d'entraînement (12), l'élément de couplage (18) ne permettant qu'une rotation limitée du corps de pendule (16).

4. Pendule centrifuge (10) conforme à l'une des revendications précédentes,
dans lequel le corps de roulement est un boulon.

5. Pendule centrifuge (10) conforme à la revendication 4,
dans lequel le corps de pendule (16) pénètre entre deux disques (22, 24) reliés solidairement l'un à l'autre de la bague de synchronisation (14), l'élément de couplage (18) s'étendant d'un contour (30) du premier disque (22) en passant au travers du contour (32) du corps de pendule (16) jusque dans un contour (32) du second disque (24) qui est exactement situé à l'opposé du contour (30) du premier disque (22).

6. Pendule centrifuge (10) conforme à l'une des revendications 1 à 3, **caractérisé en ce que**
la bague de synchronisation (14) pénètre entre deux moitiés (16a, 16b) reliées solidairement l'une à l'autre du corps de pendule (16), l'élément de couplage (18) s'étendant d'un contour (32) de la première moitié du corps de pendule (16a), en passant au travers d'un contour (30) de la bague de synchronisation (14) jusque dans un contour (32) de la seconde moitié du corps de pendule (16b) qui est exactement situé à l'opposé du contour (32) de la première moitié du corps de pendule (16a).

7. Pendule centrifuge (10) en particulier destiné à être installé sur l'arbre d'entraînement d'un moteur à combustion interne comprenant :
une bague d'entraînement (12) susceptible d'être montée solidairement en rotation sur un arbre d'entraînement,
une bague de synchronisation (14) librement mobile en rotation par rapport à la bague d'entraînement (12),
l'axe de rotation de la bague d'entraînement (12) et l'axe de rotation de la bague de synchronisation (14) étant identiques, et
au moins un corps de pendule (16) monté mobile sur la bague d'entraînement (12),
le corps de pendule (16) étant couplé cinématiquement à la bague de synchronisation (14) par l'intermédiaire d'au moins un élément de couplage de sorte que lors d'une rotation de la bague de synchronisation (14) par rapport à la bague d'entraînement (12), dans une première direction l'élément de couplage (18, 40, 42, 44) déplace le centre de gravité du corps de pendule (16) vers l'axe de rotation,
le corps de pendule (16) étant monté mobile en translation sur la bague d'entraînement (12).

8. Pendule centrifuge (10) conforme à la revendication 7,
dans lequel
le corps de pendule (16) est monté mobile en translation en direction radiale sur la bague d'entraînement (12).

9. Pendule centrifuge (10) conforme à la revendication 7,
**caractérisé en ce que**
l'élément de couplage est un filament ou une bande (40) avec lequel(laquelle) le corps de pendule (16) est relié à la bague de synchronisation (14), et la bague de synchronisation (14) a une périphérie externe ayant un contour (30) sur lequel s'appuie le filament ou la bande (40) lors d'une rotation relative entre la bague d'entraînement (12) et la bague de synchronisation (14).

10. Pendule centrifuge (10) conforme à la revendication 7,
**caractérisé en ce que**
l'élément de couplage (42) est un mécanisme d'articulation par l'intermédiaire duquel le corps de pendule (16) est relié à la bague de synchronisation (14).

11. Pendule centrifuge (10) conforme à la revendication 7,
**caractérisé en ce que**
le corps de pendule (16) est couplé à un segment externe de la bague de synchronisation (14) du fait qu'il est accroché dans un rouleau (44) qui peut rouler sur un contour (30) de la bague de synchronisation (14).

12. Pendule centrifuge (10) conforme à la revendication 7,
**caractérisé en ce que**
l'élément de couplage est un corps de roulement en particulier un boulon (18) qui est introduit en étant librement mobile dans des contours (30, 32) de la bague de synchronisation (14) et du corps de pendule (16).

13. Pendule centrifuge (10) conforme à l'une des revendications précédentes,
**caractérisé en ce que**
sur la bague d'entraînement (12) sont montés plusieurs corps de pendule (16) répartis en direction périphérique, lors d'une rotation de la bague de synchronisation (14) par rapport à la bague d'entraînement (12) dans la première direction, le centre de gravité global de tous les corps de pendule (16) étant déplacé vers l'axe de rotation.

14. Pendule centrifuge (10) conforme à l'une des revendications précédentes,
**caractérisé en ce qu'**
il est prévu un élément élastique pour permettre le couplage de la bague d'entraînement (12) à l'arbre d'entraînement et/ou un couplage de la bague d'entraînement (12) à la bague de synchronisation (14) et/ou le montage du corps de pendule (16) sur la bague d'entraînement (12).
